# EUROPEAN PATENT APPLICATION

(11) **EP 1 033 857 A2**
(43) Date of publication of application: **06.09.2000**
(21) Application number: 00103480.0
(22) Date of filing: 01.03.2000
(51) Int. Cl.: H04M 1/725, H04M 1/57

(54) **Mobile radio terminal**

(30) Priority: 01.03.1999 JP 5303399
(71) Applicant: KABUSHIKI KAISHA TOSHIBA, Kawasaki-shi, Kanagawa 210-8520 (JP)
(72) Inventor: Ito, Koichi, 1-1 Shibaura 1-chome Minato-ku Tokyo 105 (JP)
(74) Representative: HOFFMANN - EITLE

(57) **Abstract**

An image memory (18) stores, for example, an image taken by a camera (17) and an image obtained via a route of an antenna (1), transmit/receive switching section (7), receiving section (7) and demodulating section (8). At a time of an incoming call, a controller (11) reads out an output of the demodulating section (8) to obtain a telephone number, etc., of a calling party's side and reads out an image corresponding to the obtained telephone number, etc., to allow it to be displayed on a display section (14). This arrangement achieves a mobile radio terminal which, even if it has a relatively small display section, enables the user to readily identify the calling party at a time of an incoming call.

## Description

The present invention relates to a mobile radio terminal, such as a mobile radio telephone set and, in particular, to a mobile radio terminal allowing readier display of a calling party at a time of receiving a call.

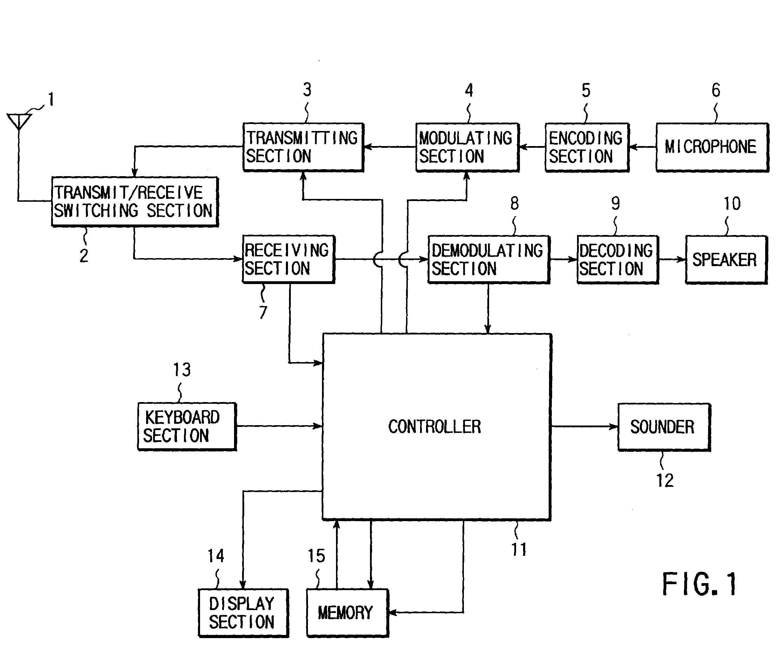

In recent years, the radio communication technique and information processing technique have been remarkably improved and, with this trend, a mobile radio terminal such as a mobile radio telephone set has been widely accepted in a remarkable way. Conventionally, this type of mobile radio terminal has been so constructed as shown in FIG. 1. FIG. 1 is a view showing an arrangement of a conventional mobile radio terminal.

As shown in FIG. 1, the conventional mobile radio terminal comprises an antenna 1, transmit/receive switching section 2, transmitting section 3, modulating section 4, encoding section 5, microphone 6, receiving section 7, demodulating section 8, decoding section 9, speaker 10, controller 11, sounder 12, keyboard section 13, display section 14 and memory 15.

In the case where talking is made on this mobile radio terminal, it follows that, at a time of sending a call, the controller 11 transmits a control signal from the antenna 1 via the transmitting section 3 and transmit/receive switching section 2 through the utilization of either a calling party's telephone number input from the keyboard section 13 or a telephone number (abbreviated dialing, redialing, etc.) stored in a memory 15 and allows a communication path to be established.

At a time of receiving a call, on the other hand, when the controller 11 receives an incoming signal through the antenna 1, transmit/receive switching section 2, receiving section 7 and demodulating section 8, the controller 11 causes a ringing tone to be produced from the sounder 12. When the user hears the incoming call and operates the keyboard section 13, the controller 11 allows a call acknowledge signal to be transmitted from the antenna 1 through the modulating section 4, transmitting section 13 and transmit/receive switching section 2 and it allows the communication path to be established.

Further, after the establishment of the communication path, the controller 11 allows control signals to be passed through the antenna 1, transmit/receive switching section 2, transmitting section 3, modulating section 4, receiving section 7 and demodulating section 8 and, at the same time, the call to be processed through the antenna 1, transmit/receive switching section 2, transmitting section 3, modulating section 4, encoding section 5, microphone 6, receiving section 7, demodulating section 8, decoding section 9 and speaker 10.

When the telephone set is picked up in response to any incoming call (that is, before the keyboard section 13 is operated), if a calling party is identified, it is convenient to handle the call properly. In recent many mobile radio terminal units, at a time of an incoming call, the controller 11 has the function of reading out a calling party's telephone number sent from a base station not shown and displaying it. This function is called a call line indication (CLI). However, it is hard to immediately identify the calling party only through his or her telephone number and it is also difficult to do so on a display section (usually an LCD display section) which has to be made compact so as to achieve better portability.

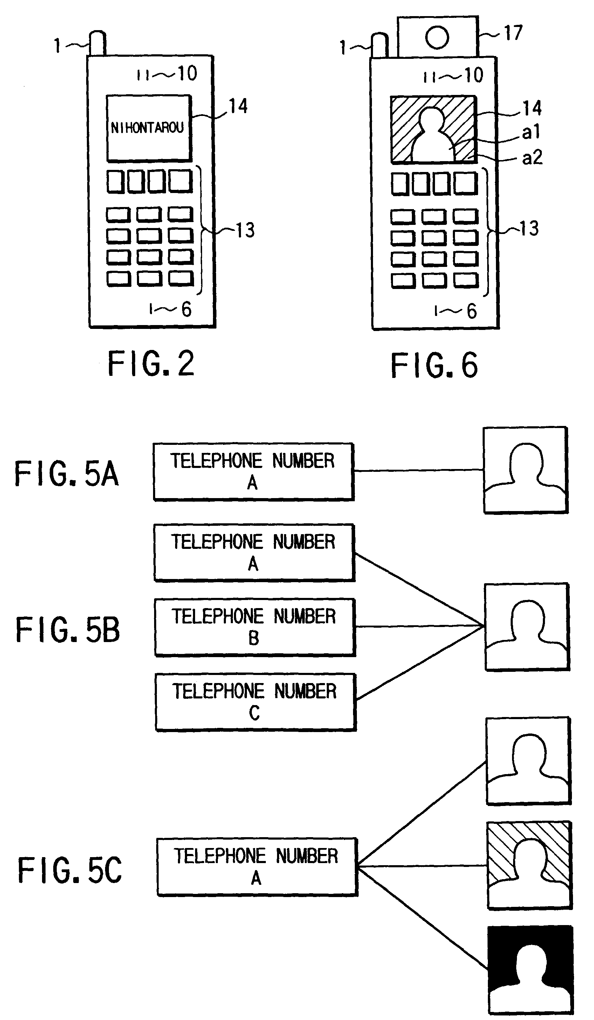

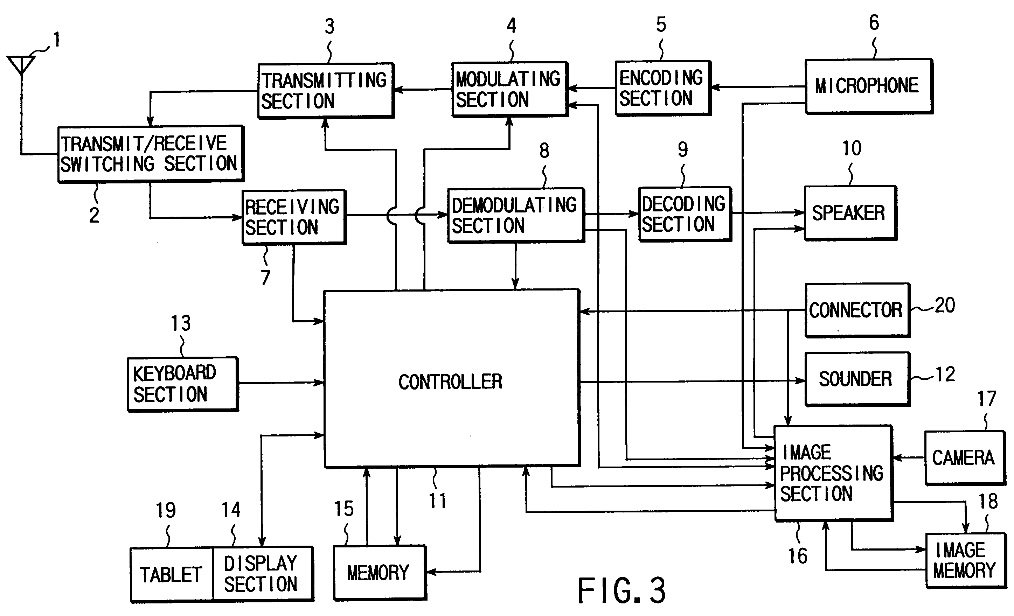

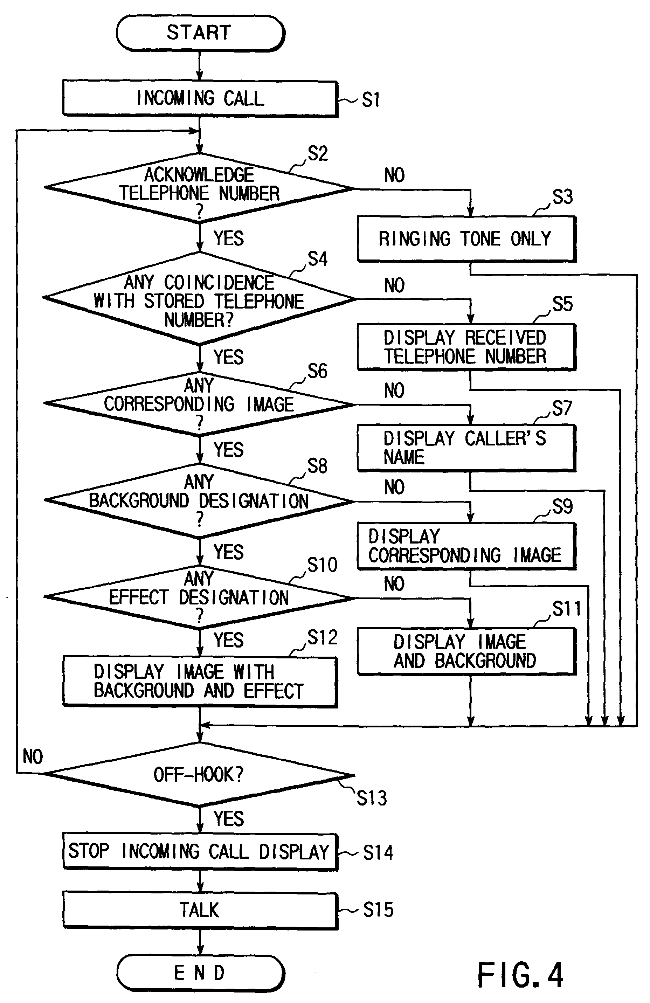

From this situation it has been the practice to compare a received calling party's telephone number with a corresponding telephone number stored in the memory 15. When a matching occurs, a name of the calling party together with the corresponding telephone number in the memory is displayed. This display example is as shown in FIG. 2.

It is true that it becomes easier to identify the calling party through a comparison with the corresponding telephone number, but a display of it on small display section 14 is somewhat illegible.

Some types prepare a plurality of kinds of ringing tone patterns from the sounder 12 and it has been the practices to change a tone pattern in accordance with the calling party or party group. In this case, however, there is a limit to the kinds of tones selectively heard by the user. Further, it is necessary to store the ringing tone of any particular user in connection with him or her (any specific group).

In a video telephone set, etc, connected to a cable line, it has been the practices to store an image sent from a calling party together with his or her telephone number in a one-to-one relation. At a time of an incoming phone call from him or her, it displays a corresponding stored image. Since, in this case, the obtaining source of an image displayed at the time of an incoming phone call is fixedly determined based on only an image sent from the calling party, it is not flexibly utilized because the user needs to have a given image properly correspond to the calling party. Further, since the image and telephone number have to be stored in a one-to-one relationship, it is not practical to have the same image properly correspond to a plurality of telephone numbers possessed by the same calling party.

In the conventional mobile radio terminals, the identification of the calling party is made on the part of the user by the numbers (telephone numbers), characters (names), tones, etc., and it has not been easy to make proper identification.

The identification of the calling party by an image as in a video telephone unit, etc., connected on a wired (cable) line can be done because the image screen is relatively large in size and better in visible identification. Even in this case, however, a lack of flexibility is evident.

It is accordingly the object of the present invention to provide a mobile radio terminal which, by adding a simpler construction thereto, enables a user to identify a calling party through a given image even on a smaller image screen.

According to an aspect of the present invention, there is provided a mobile radio terminal comprising: radio transmit/receive means; image display means; image pick-up means; means for storing an image picked up by the image pick-up means; means for obtaining calling party's information by the radio transmit/receive means; and control means for reading out an image which corresponds to the calling party's information obtained by the calling party's information obtaining means from the image storing means and displaying the read-out image on the image display means.

According to another aspect of the present invention, there is provided a mobile radio terminal comprising: radio transmit/receive means; image display means; means for obtaining an image which is possessed by any other information terminal connected to a communication path through the radio transmit/receive means; means for storing the image obtained by the image obtaining means; means for obtaining a calling party's information from information received by the radio transmit/receive means; and control means for reading out an image which corresponds to the calling party's information obtained by the calling party's information obtaining means from the image storing means and displaying the read-out image on the image display means.

According to still another aspect of the present invention, there is provided a mobile radio terminal comprising: radio transmit/receive means; image display means; means for obtaining image information received by the radio transmit/receive means; means for storing the image obtained by the image obtaining means; means for obtaining calling party's information from information received by the radio transmit/receive means; and control means for reading out an image which corresponds to the calling party's information obtained by the calling party's information obtaining means from the image storing means and displaying the read-out image on the image display means.

According to still another aspect of the present invention, there is provided a mobile radio terminal comprising: radio transmit/receive means; image display means; means for obtaining, as an image, a figure hand-written; means for storing the image obtained from the image obtaining means; means for obtaining calling party's information received by the radio transmit/receive means; and control means for reading out the image which corresponds to the calling party's information obtained by the calling party's information obtaining means from the image storing means and displaying the read-out image on the image display means.

According to still another aspect of the present invention, there is provided a mobile radio terminal comprising: radio transmit/receive means; image display means; a connector for allowing an image to be input; means for obtaining the image through the connector; means for storing the image obtained by the image obtaining means; means for obtaining calling party's information from information received by the radio transmit/receive means; and control means for reading out an image which corresponds to the calling party's information obtained by the calling party's information obtaining means from the image storing means and displaying the read-out image on the image display means.

According to still another aspect of the present invention, there is provided a mobile radio terminal comprising: radio transmit/receive means; image display means; image obtaining means; means for storing an image obtained from the image obtaining means; means for obtaining calling party's information from information received from the radio transmit/receive means; and control means for reading out an image which corresponds to the calling party's information obtained by the calling party's information obtaining means from the image storing means and displaying the read-out image on the image display means.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing an arrangement of a conventional mobile radio terminal;
FIG. 2 is an external appearance view showing a display on a conventional mobile radio terminal at a time of an incoming call;
FIG. 3 is a view showing an arrangement of a mobile radio terminal according to an embodiment of the present invention;
FIG. 4 is a flow chart for explaining an operation relating to a display at a time of an incoming call on the mobile radio terminal of the present embodiment;
FIGS. 5A to 5C, each, are a view showing a telephone number-to-image relation on the present embodiment; and
FIG. 6 is an external appearance view showing an example of display at a time of an incoming call on the present embodiment.

An embodiment of the present invention will be explained below with reference to the accompanying drawing.

FIG. 3 is a view showing an arrangement of a mobile radio terminal according to the present invention. As shown in FIG. 3, the mobile radio terminal comprises an antenna 1, transmit/receive switching section 2, transmitting section 3, modulating section 4, encoding section 5, microphone 6, receiving section 7, demodulating section 8, decoding section 9, speaker 10, controller 11, sounder 12, keyboard section 13, display section 14, memory 15, image processing section 16, camera 17 and image memory 18. This mobile radio terminal is different from the conventional mobile radio terminal shown in FIG. 1 in that the image processing section 16, camera 17 and image memory 18 are newly added to this mobile radio terminal.

This mobile radio terminal has the above-mentioned CLI function and can be utilized as a video telephone set. And an image (including an audio) signal demodulated in the demodulating section is decoded by the image processing section 16. In this case, it is preferable that an MPEG-4 system be applied to the image processing. An image decoded by the image processing section 16 is displayed on the display section (color LCD in this case) through the controller 11.

An image taken by the camera 17 is encoded by the image processing section 16 and, after being input to the demodulating section 4, is transmitted. A audio signal is also decoded by the image processing section 16 and outputted from the speaker 8. Further, an audio inputted from the microphone 5 is encoded by the image processing section 16 and, together with the image, supplied to the modulating section 4.

An explanation will be given below about the preparation for displaying an image at a time of an incoming call.

Stated in more detail, the face of a party or parties to be stored as an image in the image memory 18 is taken directly by the camera 17 and such an image is stored in the image memory 18 by an operation on the keyboard section 13. This is done at each party to be stored in a way to correspond to his or her telephone number or name together with the background and effect as will be set out below. By doing so, it is possible to, unlike the CLI function of the video telephone set connected to the conventional wired (cable) line, display the stored image at a time of an incoming call even in the case where any party has an ordinary mobile radio telephone set not equipped with an image processing function.

Now the operation relating to a display at a time of an incoming call will be explained below with reference to a flow chart shown in FIG. 4.

At a time of an incoming call (step S1), the controller 11 reads out the output of the demodulating section 8 and acknowledges whether or not the telephone number of the caller is included (step S2). When the caller's telephone number is not included (No in step S2), the controller 11 controls sounder 12 to output the incoming tone (step S3). If the caller's telephone number is included (Yes in step S2), the controller 11 confirms a coincidence between the caller's telephone number and an initially stored telephone number in the memory 15 (step S4). If there is no coincidence (No in step S4), the controller 11 controls the sounder 12 to output the incoming tone and enables the received telephone number to be displayed on the display section 14 (step S5). If a coincidence occurs (Yes in step S4), the controller 11 confirms whether or not a corresponding image is stored in the image memory 18 (step S6). If not (No in step S6), the controller 11 controls the sounder 12 to output the incoming tone and enables names which are stored in the memory 15 to be displayed on the display section 14 (step S7).

If there is a corresponding image (Yes in step S6), the controller 11 confirms whether or not there is a background designation (step S8) as will be set out below. If not (No in step S8), the controller controls the sounder 12 to output the incoming tone and enables the corresponding image to be displayed (step S9).

This image is not necessarily displayed corresponding to one telephone number in a one-to-one relation as shown in FIG. 5A. One image can be displayed corresponding to a plurality of telephone numbers as shown in FIG. 5B. By doing so, the same image can always be displayed to the same caller having, for example, a plurality of telephone numbers. One common image can be displayed corresponding to all the members of a family. For example, the family member image can be used. In this case, it is possible to save a memory capacity.

For the calling party having a plurality of telephone numbers, an MPEG4 encoding object can be commonly allocated with the use of his or her face. If a phone call is made from the mobile radio telephone set, a background image of the display can be outside image. For example, it is an illustration of streets. If a phone call is made from a caller's home, it can be illustration of a room. These illustration are stored in image memory 18.

As shown in FIG. 5C, a plurality of images can be made to correspond to one telephone number and can be changed at each incoming call or at each time zone or be displayed sequentially at an incoming call.

Finally, the controller 11 confirms whether or not there is any designation of a later-described effect on the image screen (step S10). If not (No in step S10), the controller 11 controls the sounder 12 to output the incoming tone and enables an image of a designated background which is obtained through a "background only" replacement designation to be composed by the image processing section 16 as an object image and to be displayed on the display section 14 (step S11).

FIG. 6 shows this state by way of example. A stored object image a1 and designated image a2 are displayed on the display section 14. The extraction of the image a1 from an original image is done by an object extraction function of an MPEG-4 system and, by doing so, it may be possible to extract only the object image from the original image.

It is also possible to add a display effect on the image screen (Yes in step S10, step S13). This is, for example, an ON/OFF flashing display of the background. By designating, for example, a red color to a background color and effecting an ON/OFF flashing display in synchronization with the ringing tone of an incoming call (preparing an image of a red background and image of an ordinary standard color and alternately displaying these colors) it is possible for the user to readily identify any calling party or any specific group, such as a family member, office worker, etc. It is to be noted that such a display effect can be effectively added not only to the display screen but also to a display surface where telephone numbers and names are displayed.

Further, various backgrounds may be considered, such as by allocating colors or combining various patterns.

As the effects, it may be possible to emit any combination colors alternately, gradually vary the density of any color, vary the size of the object, etc.

The obtaining (storing) of any image can be variously done. In the above-mentioned explanation, the image is taken by the camera 17 for instance but such can be done by obtaining an image from a server over a network provided. In the case of any person or persons whose image and images are registered on a home page, etc., over the internet it is only necessary to select the image from the server under the control of the controller 11 and store it in the image memory 18.

Further, a video input connector 20 may be provided and, in this case, an image obtained from the connector 20 may be gained through the controller 11 and image processing section 16 or only through the image processing circuit 16 (not through the controller) and stored in the image memory 18.

Further, an image of a calling party received during talking over the video telephone set as already set out above may be stored in the memory 17 through the keyboard operation.

Although, in the above-mentioned explanation, a still image is basically handled, it may be possible to store a movie in the memory 18 and display it because the movie can be handled on an MPEG-4 system. Since the movie takes up more memory space, it is preferable to store it for a brief time (e.g., nine seconds corresponding to the three incoming tones) and automatically repeat it under control.

Although, in the above-mentioned explanation, the "face" picture has been basically explained, it is needless to say that any proper image, such as a CG (computer graphics) image and handwritten illustration corresponding to the calling party can be utilized. From this it may be possible to provide, for example, a graphics tablet 19 on the display section 14 as a stacked layer and store an illustration handwritten on the graphics tablet 19 as an image in the image memory 17.

Further, although, in the above-mentioned embodiment, the memory 15 and image memory 18 have been explained as being separately provided, they may be physically configured as one memory or the sounder 12 and vibrator may be combined, etc. By doing so, it may be possible to freely change an associated hardware configuration.

As set out above in more detail, according to the present invention, an image relating to a calling party taken by the camera, etc., can be displayed at a time of receiving an incoming call and, even if a display section provided on the mobile radio terminal is relatively small in size, it is possible for the user to readily identify the calling party and to readily respond to a call.

By having the image correspond to the calling party's information in a one-to-one, one-to-many, many-to-one or many-to-many relation, it is possible that, even if the calling party utilizing, for example, a plurality of telephone sets makes a phone call from one of these telephone sets, the same image can always be displayed as the same calling party's phone call or, for the same calling party, it is also possible to show a different image at each incoming call or at a different time zone.

Further, since the background and effect can be set on the display screen against a calling party or group, it is possible to readily identify the caller on the part of the telephone user.

## Claims

1. A mobile radio terminal characterized by comprising:
radio transmit/receive means (1, 2, 7, 8);
image display means (14);
image pick-up means (16, 17);
means (18) for storing an image picked up by the image pick-up means (16, 17);
means (11) for obtaining calling party's information by the radio transmit/receive means (1, 2, 7, 8); and
control means (11) for reading out an image which corresponds to the calling party's information obtained by the calling party's information obtaining means (11) from the image storing means (18) and displaying the read-out image on the image display means (14).

2. A mobile radio terminal characterized by comprising:
radio transmit/receive means (1, 2, 7, 8);
image display means (14);
means (11, 16) for obtaining an image which is possessed by any other information terminal connected to a communication path through the radio transmit/receive means (1, 2, 7, 8);
means (18) for storing the image obtained by the image obtaining means (11, 16);
means (11) for obtaining a calling party's information from information received by the radio transmit/receive means (1, 2, 7, 8); and
control means (11) for reading out an image which corresponds to the calling party's information obtained by the calling party's information obtaining means (11) from the image storing means (18) and displaying the read-out image on the image display means (14).

3. A mobile radio terminal characterized by comprising:
radio transmit/receive means (1, 2, 7, 8);
image display means (14);
means (11, 16) for obtaining image information received by the radio transmit/receive means (1, 2, 7, 8);
means (18) for storing the image obtained by the image obtaining means (11, 16);
means (11) for obtaining calling party's information from information received by the radio transmit/receive means (1, 2, 7, 8); and
control means (11) for reading out an image which corresponds to the calling party's information obtained by the calling party's information obtaining means (11) from the image storing means (18) and displaying the read-out image on the image display means (14).

4. A mobile radio terminal characterized by comprising:
radio transmit/receive means (1, 2, 7, 8);
image display means (14);
means (11, 16) for obtaining, as an image, a figure hand-written;
means (18) for storing the image obtained from the image obtaining means (11, 16);
means (11) for obtaining calling party's information received by the radio transmit/receive means (1, 2, 7, 8); and
control means (11) for reading out the image which corresponds to the calling party's information obtained by the calling party's information obtaining means (11) from the image storing means (18) and displaying the read-out image on the image display means (14).

5. A mobile radio terminal characterized by comprising:
radio transmit/receive means (1, 2, 7, 8);
image display means (14);
a connector (20) for allowing an image to be input;
means (11, 16) for obtaining the image through the connector (20);
means (18) for storing the image obtained by the image obtaining means (11, 16);
means (11) for obtaining calling party's information from information received by the radio transmit/receive means (1, 2, 7, 8); and
control means (11) for reading out an image which corresponds to the calling party's information obtained by the calling party's information obtaining means (11) from the image storing means (18) and displaying the read-out image on the image display means (14).

6. A mobile radio terminal characterized by comprising:
radio transmit/receive means (1, 2, 7, 8);
image display means (14);
image obtaining means (11, 16);
means (18) for storing an image obtained from the image obtaining means (11, 16);
means (11) for obtaining calling party's information from information received from the radio transmit/receive means (1, 2, 7, 8); and
control means (11) for reading out an image which corresponds to the calling party's information obtained by the calling party's information obtaining means (11) from the image storing means (18) and displaying the read-out image on the image display means (14).

7. The mobile radio terminal according to claim 1, characterized in that the image picked up from the image pick-up means (16, 17) is made to correspond to the calling party's information in one of a one-to-one, a one-to-many, a many-to-one and a many-to-many relations.

8. The mobile radio terminal according to any one of claims 2 to 6, characterized in that the image obtained from the image obtaining means (11, 16) is made to correspond to the calling party's information in one of a one-to-one, a one-to-many, a many-to-one and a many-to-many relations.

9. The mobile radio terminal according to claim 1 or 7, characterized by further comprising image processing means (16) for dividing an original image into an object section and background, and composing a new image by combining the object section with a background having a predetermined pattern and color, wherein
the image storing means (18) stores the new image composed by the image processing means (16) on the basis of the image picked up from the image pick-up means (16, 17).

10. The mobile radio terminal according to any one of claims 2 to 6 and 8, characterized by further comprising image processing means (16) for dividing an original image into an object section and background, and composing a new image by combining the object section with a background having a predetermined pattern and color, wherein
the image storing means (18) stores the new image composed by the image processing means (16) on the basis of the image obtained by the image obtaining means (11, 16).

11. The mobile radio terminal according to any one of claims 1 to 8, characterized by further comprising image processing means (16) for dividing an original image into an object section and background, and composing a new image by combining the object section with a background having a predetermined pattern and color, wherein
the control means (11) displays a new image composed by the image processing means (16) on the image display means (14) on the basis of the image read out from the image storing means (18).

12. The mobile radio terminal according to claim 11, characterized in that the control means (11) displays a plurality of new images composed by the image processing means (16) on the image display means (14) in accordance with a predetermined order.

13. The mobile radio terminal according to any one of claims 9 to 12, characterized in that the background having a predetermined pattern and color is comprised of a background selected at each calling party's information or at each calling party's information combined group from among a plurality of backgrounds each having a different pattern or color.

14. The mobile radio terminal according to any one of claims 1 to 13, characterized in that at least one of the images constitutes a movie.
